(19) Europäisches Patentamt
European Patent Office
Office européen des brevets

(11) **EP 2 834 142 B1**

(12) **EUROPÄISCHE PATENTSCHRIFT**

(45) Veröffentlichungstag und Bekanntmachung des Hinweises auf die Patenterteilung:
**05.07.2017   Patentblatt 2017/27**

(21) Anmeldenummer: **13712555.5**

(22) Anmeldetag: **27.03.2013**

(51) Int Cl.:
**B62M 6/65** (2010.01)          **B62M 6/40** (2010.01)
**H02K 21/22** (2006.01)        **H02K 1/27** (2006.01)

(86) Internationale Anmeldenummer:
**PCT/EP2013/056501**

(87) Internationale Veröffentlichungsnummer:
**WO 2013/149902 (10.10.2013 Gazette 2013/41)**

(54) **ELEKTRISCH ANGETRIEBENES ZWEIRAD**

ELECTRICALLY DRIVEN TWO-WHEELED VEHICLE

VÉHICULE ÉLECTRIQUE À DEUX ROUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2012   DE 102012205558**

(43) Veröffentlichungstag der Anmeldung:
**11.02.2015   Patentblatt 2015/07**

(73) Patentinhaber: **Robert Bosch GmbH**
**70442 Stuttgart (DE)**

(72) Erfinder:
• **EVANS, Steven Andrew**
**77815 Buehl (DE)**
• **STUBNER, Armin**
**77815 Buehl-Altschweier (DE)**
• **MARTIN, Norbert**
**77855 Achern (DE)**
• **DIETRICH, Michel**
**F-67540 Ostwald (FR)**
• **CHENG, Fengmei**
**68167 Mannheim (DE)**

(56) Entgegenhaltungen:
**EP-A2- 0 044 987**          **DE-A1- 10 219 332**
**JP-A- 2002 331 986**       **US-A1- 2004 140 725**
**US-A1- 2008 197 737**

**Beschreibung**

Die Erfindung betrifft eine elektrisch angetriebenes Zweirad mit wenigstens einer elektrischen Maschine, die einen achsfesten Stator und einen felgenfesten Rotor aufweist, wobei der Rotor einen Rückschlussring mit einer Vielzahl von daran über den Umfang verteilt angeordneten Permanentmagneten aufweist.

Ferner betrifft die Erfindung ein Verfahren zum Betreiben eines derartigen Zweirads.

Stand der Technik

Zweiräder der Eingangs genannten Art sind aus dem Stand der Technik bekannt. Insbesondere Elektroroller werden in der Leistungsklasse bis 4 kW, teilweise auch bis 11 kW, häufig mit getriebelosen Radnaben-Motoren am Hinterrad betrieben. Bei diesen Motoren handelt es sich in der Regel um bürstenlose, elektrisch kommutierte Motoren. Diese weisen einen achsfesten Stator mit einer in der Regel hohen Nutzahl auf. Der mit dem Stator zusammenwirkende Rotor ist unmittelbar Bestandteil der Felge beziehungsweise felgenfest angeordnet und weist typischerweise einen, auf einem eisernen Rückschlussring angeordneten Kranz von Permanentmagneten, insbesondere Seltene-Erde-Magneten in hoher Polzahl auf. Die Permanentmagneten sind dabei üblicherweise auf der Innenseite des Rückschlussrings seitlich aneinander anliegend angeordnet. Die verwendete Menge an Seltene-Erde-Magneten trägt den höchsten Anteil zu den Gesamtkosten des Antriebs bei.

Nachteilig bei dieser Ausführungsform ist es, dass der Motor nur im Ankerstellbereich nutzbar betrieben werden kann. Sobald die durch die Drehung des Rotors in den Statorphasen induzierte Spannung die maximal aus der Betriebsspannungsquelle verfügbare Phasenspannung erreicht, regelt sich der Elektromotor ab und das Drehmoment fällt ab gegen Null, wodurch die mögliche Maximaldrehzahl begrenzt wird/ist. Der nächstliegende bekanntgewordene Stand der Technik ist dem Dokument US 2004/140725 zu entnehmen.

Offenbarung der Erfindung

Das erfindungsgemäße elektrisch angetriebene Zweirad mit den Merkmalen des Anspruchs 1 hat den Vorteil, dass der Rotor eine ausgeprägte Salienz aufweist. Unter einer Salienz wird eine Schenkligkeit der durch den Statorstrom und die Permanentmagnete erzeugten magnetischen Flüsse verstanden. Hierdurch kann der Maschine zum einen ein Reluktanzmoment hinzugefügt werden, und zum anderen können durch Schwächung des Erregerfeldes mittels des Statorfeldes höhere Motordrehzahlen erreicht werden. Erfindungsgemäß ist das elektrisch angetriebene Zweirad dazu derart ausgebildet, dass der Rückschlussring an seiner dem Stator zugewandten Innenseite Taschen aufweist, in denen jeweils ein Permanentmagnet, insbesondere ein Ferrit-Magnet, zumindest im Wesentlichen angeordnet ist. Die Permanentmagneten liegen somit nicht auf der Innenseite des Rotors beziehungsweise des Rückschlussrings auf, sondern sind in das Material des Rückschlussrings eingelassen beziehungsweise vergraben angeordnet. Da für jeden Permanentmagneten eine Tasche vorgesehen ist, sind die Permanentmagnete in Umfangsrichtung gesehen beabstandet zueinander in dem Rückschlussring angeordnet. Hierdurch wird auf einfache Art und Weise die Salienz der elektrischen Maschine erreicht, die zu den oben genannten Vorteilen führt.

Besonders bevorzugt ist der Abstand zwischen benachbarten Permanentmagneten mindestens doppelt so groß wie eine Luftspaltweite zwischen Rotor und Stator. Die Luftspaltweite ist der radiale Abstand zwischen den sich gegenüberliegenden Rotorinnenfläche und Statoraußenfläche. Durch die eingelassene Anordnung der Permanentmagnete in den Taschen des Rückschlussrings sind die Zwischenräume zwischen benachbarten Magneten mit Material des Rückschlussrings ausgefüllt und bevorzugt magnetisch mit diesen verbunden. Hierdurch ergibt sich eine vorteilhafte Salienz beziehungsweise Schenklichkeit der Magnetflüsse.

Gemäß einer vorteilhaften Weiterbildung der Erfindung ist vorgesehen, dass die dem Stator jeweils zugewandte Fläche der Permanentmagneten freiliegt. Während die Permanentmagnete somit im Übrigen bevorzugt von dem Material des Rückschlussrings umschlossen oder umgeben sind, sind die Flächen, die dem Stator zugewandt sind, frei vom Material des Rückschlussrings, wodurch ein radial schmal bauender Rotor geboten wird.

Besonders bevorzugt ist vorgesehen, dass ein zwischen zwei benachbarten Permanentmagneten befindlicher Steg des Rückschlussrings bündig mit der dem Stator zugewandten Flächen der Permanentmagnete abschließt. Der Steg wird von dem Material des Rückschlussrings, wie oben beschrieben, gebildet. Durch die bündige Ausbildung wird innenseitig eine durchgehende Oberfläche gebildet, die im Betrieb insbesondere geräuschvermindernd wirkt.

Gemäß einer bevorzugten Weiterbildung der Erfindung ist vorgesehen, dass der jeweilige Steg ein halbkreisförmiges Ende aufweist. Das halbkreisförmige Ende beziehungsweise die D-förmige Ausbildung des Steges im Bereich zwischen benachbarten Permanentmagneten führt dazu, dass ein magnetischer Streufluss zwischen benachbarten Permanentmagneten weitestgehend minimiert wird.

Vorzugsweise sind die Permanentmagnete in den Taschen vollständig vom Material des Rückschlussrings umgeben. Die Taschen sind insofern als geschlossene Taschen ausgebildet, die die Permanentmagnete vollständig aufnehmen und umschließen. Vorzugsweise sind die Permanentmagnete dabei in ihrer Längserstreckung tangential an dem Rückschlussring angeordnet, so dass die Taschen flach ausgebildet sind. Vorzugsweise weist der Rückschlussring auf der Innenseite im Bereich der Permanentmagnete, also in dem die freie Fläche der Permanentmagnete überdeckenden Bereich eine zykloidenartige Ausformung in Richtung des Luftspaltes beziehungsweise des Rotors derart auf, dass die Aufsetzpunkte der Zykloide jeweils in der Mitte der Stege liegen, und besonders bevorzugt auf einem Radius außerhalb der inneren Magnetoberfläche, wodurch der magnetische Streufluss zwischen benachbarten Permanentmagneten weiter minimiert wird.

Gemäß einer vorteilhaften Weiterbildung der Erfindung ist vorgesehen, dass zwischen dem Permanentmagneten und den Stegen jeweils eine Lufttasche vorgesehen ist. Die Lufttasche befindet sich somit seitlich beziehungsweise in Umfangsrichtung gesehen zwischen dem Permanentmagneten und den zwischen benachbarten Permanentmagneten befindlichen Stegen des Rückschlussrings. Hierdurch wird der Streufluss zwischen den benachbarten Permanentmagneten weiter verringert. Als besonders vorteilhaft erweist es sich, wenn die jeweilige Lufttasche derart gestaltet ist, dass sie einen möglichst schmalen, magnetisch schnell sättigenden Quersteg im Rückschlussringmaterial zwischen benachbarten Überdeckungsbereichen des Rückschlussrings bildet, wodurch der magnetische Streufluss zwischen benachbarten Permanentmagneten minimiert wird. Vorzugsweise sind die Magneten auch in diesem Fall in ihrer Längserstreckung tangential an dem Rückschlussrings beziehungsweise den jeweiligen Taschen angeordnet, so dass flache Taschen und damit ein flacher Rückschlussring gewährleistet werden. Erfindungsgemäß sind die Permanentmagnete speichenförmig, insbesondere mit einer alternierenden tangentialen Magnetisierung, in dem Rückschlussring angeordnet. Die Permanentmagnete weisen zweckmäßigerweise eine quadratisch oder rechteckförmige Grundform auf, mit einer im Vergleich zur Grundform niedrigen Höhe. In diesem Fall sind sie mit ihrer Längserstreckung radial ausgerichtet, so dass die Permanentmagnete mit ihren großen Oberflächen einander gegenüberliegen, während eine schmale Randfläche dem Stator zugewandt ist. In Verbindung mit ihrer alternierenden Magnetisierung führt dies zu einer radial in Statorrichtung wirksamen Flusskonzentration, wobei die Magnete in ihrer speichenförmigen Anordnung tangential magnetisiert sind, so dass sich unterschiedliche magnetische Pole benachbarter Permanentmagnete gegenüber liegen. Vorteilhafterweise sind die Taschen des Rückschlussrings in diesem Fall radial beidseitig offen ausgebildet. Die radialen Seitenflächen der Permanentmagnete liegen somit frei, wodurch ein in diesem Fall unerwünschter Rückschluss durch das Material des Rückschlussrings vermieden wird. Bei der speichenförmigen Anordnung der Permanentmagnete verliert der Rückschlussring somit seine eigentliche Rückschlusswirkung. Ist es aus konstruktiven Gründen notwendig, die Permanentmagneten einer Radialseite, beispielsweise auf der Innenseite, mit Material des Rückschlussrings zu überdecken, so wird vorzugsweise ein Verbindungssteg, der insbesondere einstückig mit den zwischen den Permanentmagneten liegenden Rückschlussringsegmenten verbunden ist, vorgesehen, der derart dünn ausgebildet ist, dass er schnell sättigt und insoweit magnetische Streuflüsse vermindert. Bevorzugt ist jedoch -wie bereits erwähnt- der Rückschlussring im Bereich der Permanentmagnete unterbrochen, so dass er aus mehreren insbesondere einzelnen zwischen benachbarten Permanentmagneten liegenden Rückschlussringsegmenten besteht. Diese können beispielsweise durch eine stoffschlüssige Verbindung mit den Permanentmagneten verbunden sein. Beispielsweise kann hier für ein Verkleben der Rückschlussringsegmente mit dem Permanentmagneten vorgesehen werden.

Gemäß einer vorteilhaften Weiterbildung der Erfindung ist vorgesehen, dass benachbarte Permanentmagnete V-förmig, insbesondere mit alternierender Ausrichtung benachbarter Permanentmagnetpaare zueinander angeordnet sind. Diese Anordnung eignet sich besonders zur Verwendung von Ferrit-Magneten. Die V-förmige Ausrichtung unterscheidet sich von einer speichenförmigen Anordnung dahingehend, dass die Permanentmagnete nicht radial bezüglich der Rotationsachse ausgerichtet sind, sondern von der radialen Ausrichtung abweichend einen größeren Winkel zwischen sich aufweisen. In Verbindung mit paarweise alternierender Magnetisierung der Permanentmagnete führt dies zu einer radial in Statorrichtung wirksamen Flusskonzentration. Die V-förmige Aufspreizung der benachbarten Permanentmagnete erhöht dabei das wirksame Reluktanzmoment der elektrischen Maschine. Vorzugsweise sind auch in diesem Fall in Richtung senkrecht zur Magnetisierungsrichtung zwischen Permanentmagneten und Rückschlussmaterial Lufttaschen eingebracht, wodurch magnetische Streuflüsse zwischen benachbarten Permanentmagneten minimiert werden.

Das erfindungsgemäße Verfahren mit den Merkmalen des Anspruchs 9 zeichnet sich dadurch aus, dass die elektrische Maschine mit einer elektrischen Vorkommutierung oder Nachkommutierung zum Erzeugen eines Reluktanzmomentes angesteuert wird. Besonders bevorzugt wird je nach vorliegendem Betriebszustand die elektrische Maschine elektrisch vorkommutiert oder nachkommutiert, um jeweils das zusätzliche Reluktanzmoment zu erhalten, wodurch der Drehzahlbereich und Drehmomentbereich der elektrischen Maschine erweitert wird. Vorteilhafterweise werden für jeden statischen oder dynamischen Betriebszustand des Motors beziehungsweise der elektrischen Maschine für eine Optimierung der Ansteuerung ein Satz optimierter Ansteuerparameter beispielsweise in einem entsprechenden Kennfeld hinterlegt, um im Betrieb berücksichtigt zu werden.

Im Folgenden soll die Erfindung anhand der Zeichnung näher erläutert werden. Dazu zeigen

Figur 1                    ein Zweirad in einer perspektivischen Darstellung,

Figuren 2A und 2B    die Salienz von magnetischen Flüssen einer elektrischen Maschine des Zweirads,

Figur 3    ein Ersatzschaltbild virtueller Induktivitäten der elektrischen Maschine,

Figur 4    ein erstes Ausführungsbeispiel einer vorteilhaften Ausbildung eines Rotors der elektrischen Maschine,

Figur 5    ein zweites Ausführungsbeispiel des Rotors,

Figur 6    ein drittes Ausführungsbeispiel des Rotors,

Figur 7    ein viertes Ausführungsbeispiel des Rotors,

Figur 8    ein fünftes Ausführungsbeispiel des Rotors und

Figur 9    ein sechstes Ausführungsbeispiel des Rotors, jeweils in einer vereinfachten Schnittdarstellung.

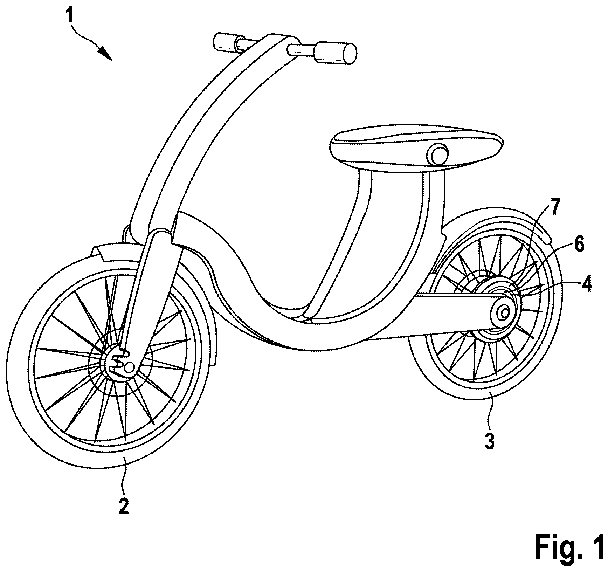

Figur 1 zeigt in einer perspektivischen Darstellung ein elektrisch angetriebenes Zweirad 1, dessen Vorderrad 2 lenkbar und dessen Hinterrad 3 durch eine elektrische Maschine 4, die vorliegend als Radnabenmotor 5 ausgebildet ist, antreibbar ist. Die elektrische Maschine 4 weist einen achsfesten Stator 6 sowie einen felgenfesten Rotor 7 auf, wobei der Rotor 7 koaxial zu dem Stator 6 angeordnet und ausgerichtet ist.

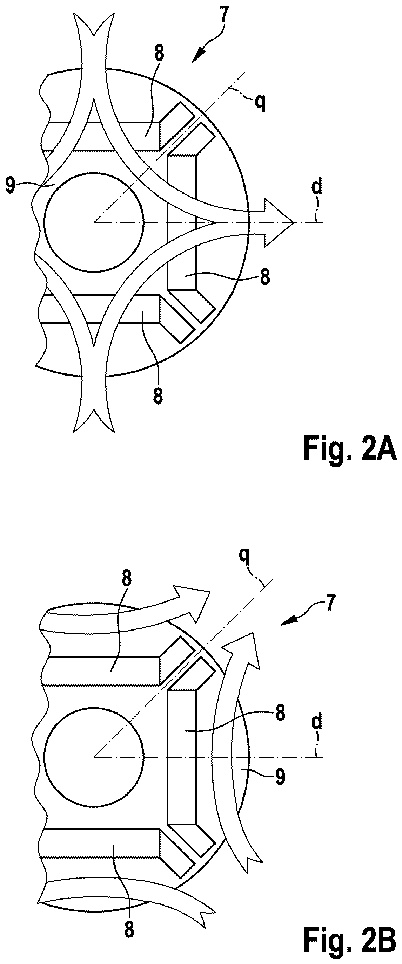

Üblicherweise ist der Rotor 7 mit einer Vielzahl von nebeneinander auf der Innenseite angeordneten Permanentmagneten, typischerweise Seltene-Erden-Magneten, versehen. Die übliche Bauweise weist den Nachteil auf, dass bekannte Rotoren so gut wie keine ausgeprägte Salienz aufweisen. Der Begriff der Salienz, der aus dem Englischen "salience" kommt, soll in Bezug auf Figuren 2A und 2B näher erläutert werden. Im Rotor-festen Koordinatensystem einer permanenterregten Synchronmaschine beschreibt die sogenannte q-Achse die Richtung eines durch den Statorstrom erzeugten, magnetischen Flusses eines Rückschlussrings 9, senkrecht zur Erregung, die von den Permanentmagneten 8 erzeugt wird, wie in Figuren 2A und 2B dargestellt. Die d-Achse bezeichnet die Richtung des magnetischen Flusses, der primär durch die Permanentmagnete 8 erzeugt wird.

Bei Ansteuerung der elektrischen Maschine (ohne Vorkommutierung) erzeugt der Stator 6 keinen Flussanteil in d-Richtung. Die Flüsse in d- und q-Richtung sowie das Motormoment $M_{Mi}$ berechnen sich bei einem zum Beispiel dreiphasigen Motor gemäß:

$$\Psi_d = L_d \cdot I_d + \Psi_{PM} = \Psi_{PM}\big|_{Id=0}$$

$$\Psi_q = L_q \cdot I_q$$

$$M_{Mi} = \frac{3}{2} \cdot Z_p \cdot \Psi_{PM} \cdot I_q$$

Wobei $L_d$, $L_q$ die instantanen, virtuellen Stator-Induktivitäten in d- und q-Richtung darstellen, $Z_p$ der Polpaarzahl entspricht, und $\Psi_d$, $\Psi_q$ und $\Psi_{PM}$ der jeweilige Flussanteil in d- und q-Richtung sowie der Permanentmagnete PM ist.

Die virtuellen Induktivitäten $L_d$ und $L_q$ ergeben sich in einer Motor-Topologie nach Rückwärtsberechnung aus einem Ringintegral entlang der betrachteten Magnetflüsse. Da die magnetische Permeabilität ferromagnetischer Materialien nahezu gleich der von Luft ist, ist ersichtlich, dass bei Motoren mit Permanentmagneten in der typischen Oberflächenanordnung die virtuellen Induktivitäten $L_d$ und Lq nahezu gleich sind, wobei es unerheblich ist, ob zwischen den Permanentmagneten ein Luftspalt vorgehalten wird oder ob wie üblich die Permanentmagnete seitlich aneinander anliegend aufgebracht werden.

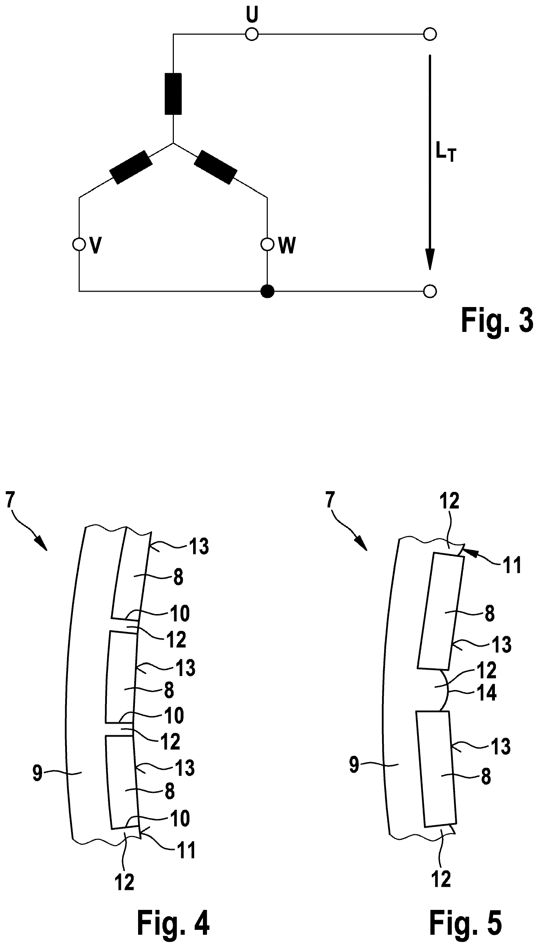

Vorteilhafterweise sind die Permanentmagnete der elektrischen Maschine 4 zumindest bereichsweise vergraben, wie in Figuren 4 bis 9 dargestellt, angeordnet. Durch die vorteilhafte Anordnung der Permanentmagnete innerhalb des die Permanentmagnete 8 tragenden Rückschlussrings 9, liefern die Ringintegrale unterschiedliche Werte für $L_d$ und Lq. Da $L_d$ und Lq instantane, virtuelle Induktivitäten beschreiben, sind diese typischerweise auch abhängig vom Betriebszustand der elektrischen Maschine 4, insbesondere von deren Drehzahl.

Wird vorteilhafterweise für die derart ausgebildete elektrische Maschine 4 ein aus Sicht des Rotor-festen Koordinatensystems zeitinvarianter Phasenvoreilwinkel gewählt, der die $L_d$-Komponente nicht verschwinden lässt, dann ergeben sich die Betriebsgrößen Fluss $\Psi_d$, $\Psi_q$, $\Psi_{PM}$, Phasenspannung $U_d$, $U_q$, Drehmoment $M_{Mi}$, elektrische Rotationsgeschwindigkeit $\Omega_L$, Anzahl der Polpaare $Z_p$ und Summe der Phasenströme $I_a$, $I_b$, $I_c$ wie folgt:

$$\Psi_d = L_d \cdot I_d + \Psi_{PM}$$

$$\Psi_q = L_q \cdot I_q$$

$$U_d = R_1 \cdot I_d + \frac{d\Psi_d}{dt} - \Omega_L \cdot \Psi_q$$

$$U_q = R_1 \cdot I_q + \frac{d\Psi_q}{dt} + \Omega_L \cdot \Psi_d$$

$$M_{MI} = \frac{3}{2} \cdot Z_p \cdot \left(\Psi_{PM} \cdot I_q + \left(L_d - L_q\right) \cdot I_d \cdot I_q\right)$$

$$\Omega_L = Z_p \cdot \Omega_m$$

$$I_a + I_b + I_c = 0$$

Die Formeln gelten bei einer Sinus-Kommutierung der elektrischen Maschine 4. Eine elektrische unaufwändigere Block-Kommutierung würde den Gleichungen höhere harmonische Terme hinzufügen, die grundsätzlichen Zusammenhänge jedoch nicht ändern.

Zum Drehmoment addiert sich aufgrund der zumindest bereichsweise vergrabenen Anordnungen der Permanentmagnete 8 in dem Rückschlussring 9 ein zusätzlicher Drehmomentanteil, das sogenannte Reluktanz-Moment $(L_d\text{-}L_q)\text{*}I_d\text{*}I_q$. Durch Optimierung der Ansteuerung, zum Beispiel nach MTPA (Max Torque per Ampere = maximales Drehmoment pro Ampere) oder MTPV (Max Torque per Volt (maximales Drehmoment pro Volt)) ist es nun möglich, für jeden statischen oder dynamischen Betriebszustand des Motors einen Satz optimierter Ansteuerparameter zu wählen.

Gleichzeitig addiert sich zur Permanent-Errregung der elektrischen Maschine eine Komponente $L_d\text{*}I_d$. Bei der Vorkommutierung ($I_d$<0) reduziert sich dazu der Erregerfluss in d-Richtung und damit die induzierte, elektromotorische Gegenspannung, wodurch dem Motor höhere Drehzahlen ermöglicht werden.

Die messbare Terminal-Induktivität $L_T$ eines 3-Phasenmotors berechnet sich mit den virtuellen Induktivitäten mit der in Figur 3 dargestellten Anordnung wie folgt:

$$L_T = \frac{3}{2}\left(\frac{L_d + L_q}{2} + \frac{L_d - L_q}{2} \cdot \cos 2\theta\right)$$

Hierbei beschreibt $\theta$ den elektrischen Rotorlagewinkel des Rotors 7. Bei ausgeprägter Salienz schwingt die gemessene Terminal-Induktivität mit dem Cosinus des Lagewinkels zwischen 3/2 $L_d$ und 3/2 Lq. Zur eindeutigen Erkennung der Rotorlage genügt danach eine zusätzliche Vorzeichenerkennung zur Unterscheidung der Intervalle 0 - $\pi$ und $\pi$ - $2\pi$. Bei Messung der Terminal-Induktivität, zum Beispiel durch Aufmodellieren eines hochfrequenten Signals mit vorgegebener d/q-Orientierung auf die Statorspannungen und getrennter Ermittlung der resultierenden Phasenströme $I_d$ und $I_q$, kann durch geeignete Iterationsverfahren die Mehrdeutigkeit des Cosinus hierzu auch ohne zusätzlichen Sensor aufgelöst und somit eine geberlose Rotorlagewinkelerkennung durchgeführt werden.

Figuren 4 bis 9 zeigen, wie eingangs bereits erwähnt, unterschiedliche Ausführungsbeispiel für die vorteilhafte Anordnung der Permanentmagneten 8 an dem Rückschlussring 9.

Figur 4 zeigt ein erstes Ausführungsbeispiel, bei welchem der Rückschlussring 9 an seiner Innenseite mit nach innen geöffneten Taschen 10 versehen ist, in welchen jeweils einer der Permanentmagnete 8 einliegt. Die Permanentmagnete 8 weisen eine im Wesentlichen rechteckförmige oder quadratische Grundform auf mit einer im Vergleich zur Längserstreckung geringen Höhe. Die Taschen 10 sind derart ausgebildet, dass die Permanentmagnete 8 flach an der Innenseite 11 des Rückschlussrings 9 angeordnet sind, so dass sich ihre Höhe im Wesentlichen radial erstreckt. Die Taschen 10 sind dabei in ihrer Form der Form der Permanentmagnete 8 angepasst, so dass diese im Wesentlichen spielfrei in den Taschen 10 aufgenommen gehalten sind. Die Taschen 10 beziehungsweise Permanentmagnete 8 sind dabei an der Innenseite 11 des Rückschlussrings 9 in Umfangsrichtung betrachtet jeweils beabstandet zueinander angeordnet, wobei zwischen benachbarten Permanentmagneten 8 beziehungsweise Taschen 10 jeweils ein Steg 12 vom Material des Rückschlussrings 9 verbleibt. Durch die Anordnung der Permanentmagnete 8 in den Taschen 10, die durch die Stege 12 insofern voneinander getrennt werden, sind die Permanentmagnete 8 in den Taschen 10 beziehungsweise in dem Rückschlussring 9 vergraben angeordnet. Vorzugsweise ist die Breite der Stege 12 und damit der Mindestabstand zwischen benachbarten Permanentmagneten 8 mindestens doppelt so groß gewählt, wie die Luftspaltweite zwischen Rotor 7 und dem innenliegenden Stator 6. Der Steg 12 ist dabei magnetisch mit den Permanentmagneten 8 verbunden und liegt insofern insbesondere an den Seiten der benachbarten Permanentmagnete 8 derart an, dass sie in Berührungskontakt miteinander stehen. Weiterhin ist die radiale Tiefe der Taschen 10 derart gewählt, dass die Permanentmagnete 8 mit ihrer freiliegenden Fläche 13 mit den Stegen 12 bündig auf der Innenseite 11 abschließen, so dass im Wesentlichen eine durchgehende Innenfläche auf der Innenseite 11 gebildet wird, die zur Geräuschreduzierung beiträgt.

Durch die vorteilhafte Ausbildung des Rotors 7 wird die zuvor beschriebene ausgeprägte Salienz der elektrischen Maschine 4 erzeugt, die den nutzbaren Drehmoment-Drehzahlbereich der elektrischen Maschine 4 vergrößert, ohne dass die Größe der elektrischen Maschine 4 selbst erweitert werden müsste. Die ausgeprägte Salienz erlaubt es, dass die elektrische Maschine 4 bis zu 30 Sekunden Boostleistung von bis zu 50% über der Nennleistung bereitstellen kann ohne zu überhitzen. Darüber hinaus kann die elektrische Maschine 4 zur Ansteuerung und Regelung mittels geberloser Rotorlage Erfassung betrieben werden, wobei die Rotorposition insbesondere auch im Stillstand genau erkannt werden kann. Die Ansteuerung kann dabei durch die zweckmäßigerweise elektrisch kommutierte elektrische Maschine 4 in Verbindung mit einer Feldorientierten Regelung zur geberlosen Rotorlage Erfassung durch Messung der Motorimpendanz, beispielsweise durch Einleiten eines hochfrequenten Testsignals in den Stator und Messung der induktiven Antwort, bestimmt werden.

Darüber hinaus sind die Permanentmagneten 8 vorliegend als Ferrit-Magneten ausgebildet, die im Vergleich zu den sonst verwendeten Seltene-Erde-Magneten sehr viel kostengünstiger in der Anschaffung sind, wodurch die Herstellungskosten für die elektrische Maschine 4 beziehungsweise das Zweirad 1 gesenkt werden.

Die weiteren Ausführungsbeispiele des Rotors 7, wie in Figuren 5 bis 9 gezeigt, führen zu den bereits genannten Vorteilen. Aus der Figur 4 bereits bekannte Elemente sind dabei mit den gleichen Bezugszeichen versehen, so dass insofern auf die oben stehende Beschreibung verwiesen wird. Im Folgenden soll im Wesentlichen auf die Unterscheide eingegangen werden.

Das in Figur 5 gezeigte zweite Ausführungsbeispiel des Rotors 7 unterscheidet sich zu dem vorhergehenden Ausführungsbeispiel dahingehend, dass die zwischen benachbarten Permanentmagneten 8 liegenden Stege 12 nicht bündig mit den freien Flächen 13 der Permanentmagnete 8 abschließen, sondern ein halbkreisförmiges Ende 14 aufweisen, das dem jeweiligen Steg 12 eine D-Form verleiht. Der höchste Punkt des Stegs 12, beziehungsweise der radial am weitesten nach innen ragende Punkt des Endes 14 des Stegs 12, liegt dabei im Wesentlichen auf Höhe der freien Flächen 13. Durch die halbkreisbeziehungsweise kuppelförmige Ausbildung des Endes 14 wird ein magnetischer Streufluss zwischen benachbarten Permanentmagneten 8 weitestgehend minimiert.

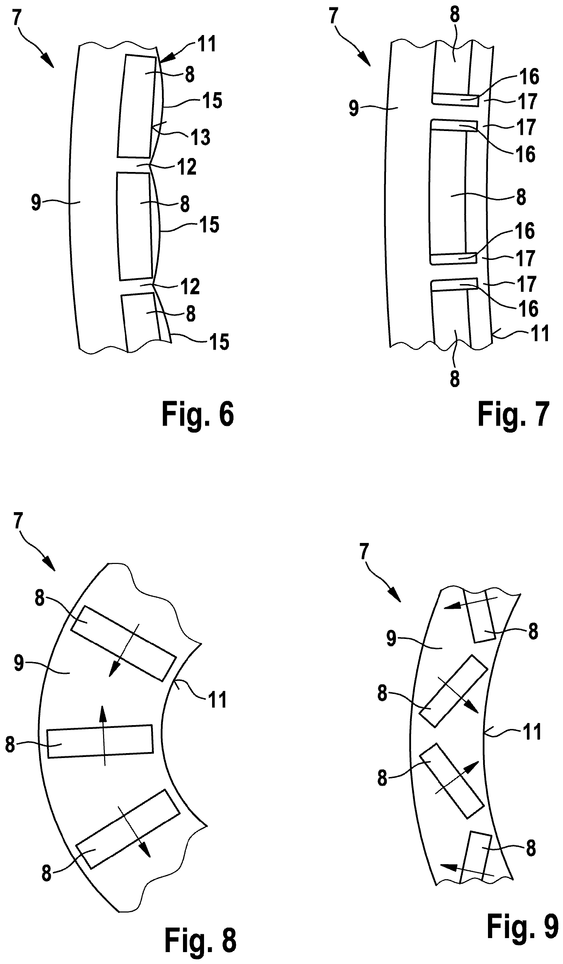

Figur 6 zeigt ein drittes Ausführungsbeispiel, das sich von dem Ausführungsbeispiel aus Figur 4 dahingehend unterscheidet, dass die Taschen 10 geschlossen ausgebildet sind, so dass die Permanentmagnete 8 vollständig in dem Rückschlussring 9 vergraben angeordnet sind. Dazu sind die Taschen 10 an der Innenseite 11 des Rückschlussrings 9 mit einer Überdeckung 15 versehen, die aus dem Material des Rückschlussrings 9 gebildet ist und insbesondere einstückig mit diesem ausgebildet ist. Die jeweilige Überdeckung 15 erstreckt sich von einem Steg 12 zum Nächsten über eine Tasche 10 und den darin liegenden Permanentmagneten 8. Wie in Figur 6 dargestellt ist die Überdeckung 15 vorteilhafterweise in Richtung des Luftspalts, also in Richtung des Stators 6, mit einer zykloidenartigen Ausformung versehen, so dass der Aufsatzpunkt der Zykloide jeweils in der Mitte des jeweiligen Stegs 12 liegt, und zwar auf einem Radius außerhalb der inneren Magnetoberfläche beziehungsweise der zuvor freien Fläche 13 des jeweiligen Permanentmagnets 8, um den magnetischen Streufluss zwischen benachbarten Permanentmagneten 8 zu minimieren.

Das in Figur 7 gezeigte vierte Ausführungsbeispiel unterscheidet sich von dem vorhergehenden Ausführungsbeispiel dahingehend, dass zwischen den Stegen 12 und den Permanentmagneten 8 jeweils eine seitliche Lufttasche 16 vorgesehen ist. Vorteilhafterweise sind die Lufttaschen 16 derart zu den Permanentmagneten 8 und den Stegen 12 eingebracht, dass sie jeweils luftspaltseitig einen jeweils schmalen, magnetisch schnell sättigenden Quersteg 17 aufweisen, der den Rückschlussring 9 innenseitig schließt, um den magnetischen Streufluss zwischen benachbarten Permanentmagneten 8 zu minimieren. Die Lufttaschen 16 erstrecken sich radial somit über die Höhe der Permanentmagneten 8 hinaus in das Material des Rückschlussrings 9 bis zu den jeweiligen Querstegen 17 hinein.

Das in Figur 8 gezeigte fünfte Ausführungsbeispiel zeigt den Rückschlussring 9 des Rotors 7, in welchem die Permanentmagnete 8 ebenfalls vergraben angeordnet sind. Dabei sind die Permanentmagnete 8 speichenförmig in dem Rückschlussringmaterial angeordnet, so dass sie sich radial in dem Rückschlussring 9 erstrecken. Benachbarte Permanentmagnete 8 liegen somit V-förmig zueinander in dem Rückschlussring 9. Durch die speichenförmige Anordnung in Verbindung mit ihrer alternierenden tangentialen Magnetisierung, wie durch Pfeile angedeutet, führen die Permanentmagnete 8 zu einer radial in Statorrichtung wirksamen Flusskonzentration. Als vorteilhaft erweist es sich, wenn in radialer Richtung zwischen Permanentmagneten 8 und Rückschlussring 9 Lufttaschen (hier nicht dargestellt) zumindest auf der dem Luftspalt beziehungsweise dem Stator zugewandten Seite, vorzugsweise auf beiden Seiten, eingebracht sind, um magnetische Streuflüsse zwischen benachbarten Permanentmagneten 8 zu minimieren. Dabei werden die Lufttaschen von derart radial schmalen, die Permanentmagnete überdeckenden Stegen gebildet, die schnell sättigen, um die magnetischen Streuflüsse zu vermeiden. Alternativ können die Permanentmagnete 8 auch radial freiliegend in dem Rückschlussring 9 angeordnet sein, wobei dann der Rückschlussring 9 aus einer Vielzahl von Rückschlussringsegmenten gebildet wird, die jeweils zwischen benachbarten Permanentmagneten 8 vorgesehen sind.

Figur 9 zeigt ein sechstes Ausführungsbeispiel, bei welchem die Permanentmagnete 8 in dem Rückschlussring 9 vollständig vergraben und V-förmig mit alternierender Ausrichtung benachbarter Permanentmagnetpaare angeordnet sind. Durch die alternierende Ausrichtung ergibt sich ein zickzackförmiger Verlauf der Permanentmagnete 8 in dem Rückschlussring 9. In Verbindung mit der paarweise alternierenden Magnetisierung, wie durch Pfeile dargestellt, führt dies zu einer radial in Statorrichtung wirksamen Flusskonzentration. Die Aufspreizung der Permanentmagnet-Paare erhöht dabei das wirksame Reluktanzmoment der elektrischen Maschine 4. Auch hier erweist es sich als vorteilhaft, wenn in Richtung senkrecht zur Magnetisierungsrichtung zwischen den Permanentmagneten und dem Material des Rückschlussrings 9 Lufttaschen eingebracht sind (hier nicht dargestellt), um magnetische Streuflüsse zwischen benachbarten Magneten zu minimieren.

**Patentansprüche**

1. Elektrisch angetriebenes Zweirad (1) mit wenigstens einer elektrischen Maschine (4), die einen achsfesten Stator (6) und einen felgenfesten Rotor (7) aufweist, wobei der Rotor (7) einen Rückschlussring (9) mit einer Vielzahl von daran über den Umfang verteilt angeordneten Permanentmagneten (8) aufweist, wobei der Rückschlussring (9) an seiner dem Stator (6) zugewandten Innenseite (11) Taschen (10) aufweist, in denen jeweils ein Permanentmagnet (8), insbesondere ein Ferrit-Magnet, zumindest im Wesentlichen angeordnet ist, **dadurch gekennzeichnet, dass** die Permanentmagnete (8) speichenförmig mit ihrer Längserstreckung radial in dem Rückschlussring (9) angeordnet/ausgerichtet sind.

2. Zweirad nach Anspruch 1, **dadurch gekennzeichnet, dass** der Abstand zwischen benachbarten Permanentmagneten (8) mindestens doppelt so groß ist wie eine Luftspaltweite zwischen Rotor (7) und Stator (6)

3. Zweirad nach einem der vorhergehenden Ansprüche, **dadurch gekennzeichnet, dass** die dem Stator (6) jeweils zugewandte Fläche (13) der Permanentmagnete (8) freiliegt.

4. Zweirad nach einem der vorhergehenden Ansprüche, **dadurch gekennzeichnet, dass** ein zwischen benachbarten Permanentmagneten (8) befindlicher Steg (12) des Rückschlussrings (9) bündig mit den dem Stator (6) zugewandten Flächen (13) der Permanentmagnete (8) abschließt.

5. Zweirad nach einem der vorhergehenden Ansprüche, **dadurch gekennzeichnet, dass** der jeweilige Steg (12) ein halbkreisförmiges dem Stator (6) zugewandtes Ende (14) aufweist.

6. Zweirad nach einem der vorhergehenden Ansprüche, **dadurch gekennzeichnet, dass** die Permanentmagnete (8) in den Taschen (10) vollständig von dem Rückschlussring (9) umgeben sind.

7. Zweirad nach einem der vorhergehenden Ansprüche, **dadurch gekennzeichnet, dass** zwischen den Permanentmagneten (8) und den Stegen (12) jeweils eine Lufttasche (16) vorgesehen ist.

8. Zweirad nach einem der vorhergehenden Ansprüche, **dadurch gekennzeichnet, dass** benachbarte Permanentmagnete (8) V-förmig, insbesondere mit einer alternierenden Ausrichtung benachbarter Permanentmagnetpaare, zueinander angeordnet sind.

9. Verfahren zum Betreiben eines elektrisch angetriebenen Zweirads (1), das nach einem oder mehrerer der vorhergehenden Ansprüche ausgebildet ist, **dadurch gekennzeichnet, dass** die elektrische Maschine (4) mit einer elektrischen Vorkommutierung oder Nachkommutierung zum Erzeugen eines Reluktanzmomentes angesteuert wird.

## Claims

1. Electrically driven two-wheeled vehicle (1) comprising at least one electrical machine (4) which has a stator (6) which is fixed to an axle and a rotor (7) which is fixed to a rim, wherein the rotor (7) has a magnetic return path ring (9) with a large number of permanent magnets (8) arranged distributed over the circumference thereof, wherein the magnetic return path ring (9) has pockets (10) on its inner face (11) which faces the stator (6), a permanent magnet (8), in particular a ferrite magnet, being at least substantially arranged in each of the said pockets, **characterized in that** the permanent magnets (8) are arranged/oriented in the manner of spokes with their longitudinal extent radially in the magnetic return path ring (9).

2. Two-wheeled vehicle according to Claim 1, **characterized in that** the distance between adjacent permanent magnets (8) is at least twice the size of an air gap width between the rotor (7) and the stator (6).

3. Two-wheeled vehicle according to either of the preceding claims, **characterized in that** the surface (13) of the permanent magnets (8) which in each case faces the stator (6) is exposed.

4. Two-wheeled vehicle according to one of the preceding claims, **characterized in that** a web (12) of the magnetic return path ring (9), which web is located between adjacent permanent magnets (8), terminates flush with those surfaces (13) of the permanent magnets (8) which face the stator (6).

5. Two-wheeled vehicle according to one of the preceding claims, **characterized in that** the respective web (12) has a semi-circular end (14) which faces the stator (6).

6. Two-wheeled vehicle according to one of the preceding claims, **characterized in that** the permanent magnets (8) are completely surrounded by the magnetic return path ring (9) in the pockets (10).

7. Two-wheeled vehicle according to one of the preceding claims, **characterized in that** an air pocket (16) is provided between the permanent magnets (8) and the webs (12) in each case.

8. Two-wheeled vehicle according to one of the preceding claims, **characterized in that** adjacent permanent magnets (8) are arranged in a V shape, in particular with an alternating orientation of adjacent pairs of permanent magnets, in relation to one another.

9. Method for operating an electrically driven two-wheeled vehicle (1) which is designed according to one or more of the preceding claims, **characterized in that** the electrical machine (4) is driven with electrical pre-comminution or post-comminution for generating a reluctance torque.

## Revendications

1. Bicyclette (1) à propulsion électrique, comprenant au moins une machine électrique (4) qui possède un stator (6) monté à demeure sur essieu et un rotor (7) monté à demeure sur jante, le rotor (7) possédant une bague de reflux (9) comportant une pluralité d'aimants permanents (8) distribués sur celle-ci sur le pourtour, la bague de reflux (9) possédant des poches (10) sur son côté intérieur (11) qui fait face au stator (6), dans lesquelles est respectivement disposé, au moins sensiblement, un aimant permanent (8), notamment un aimant en ferrite, **caractérisée en ce que** les aimants permanents (8) sont disposés/orientés dans la bague de reflux (9) en forme de rayons de roue avec leur projection longitudinale dans le sens radial.

2. Bicyclette selon la revendication 1, **caractérisée en ce que** l'écart entre les aimants permanents (8) voisins est au moins le double d'une largeur d'entrefer entre le rotor (7) et le stator (6).

3. Bicyclette selon l'une des revendications précédentes, **caractérisée en ce que** la surface (13) des aimants permanents (8) qui fait respectivement face au stator (6) est découverte.

4.  Bicyclette selon l'une des revendications précédentes, **caractérisée en ce qu'**un élément jointif (12) de la bague de reflux (9) qui se trouve entre des aimants permanents (8) voisins se termine à fleur des surfaces (13) des aimants permanents (8) qui font face au stator (6).

5.  Bicyclette selon l'une des revendications précédentes, **caractérisée en ce que** l'élément jointif (12) correspondant possède une extrémité (14) en forme de demi-cercle qui fait face au stator (6).

6.  Bicyclette selon l'une des revendications précédentes, **caractérisée en ce que** les aimants permanents (8) dans les poches (10) sont entièrement entourés par la bague de reflux (9).

7.  Bicyclette selon l'une des revendications précédentes, **caractérisée en ce qu'**une poche d'air (16) se trouve respectivement entre les aimants permanents (8) et les éléments jointifs (12).

8.  Bicyclette selon l'une des revendications précédentes, **caractérisée en ce que** les aimants permanents (8) voisins sont disposés les uns par rapport aux autres en forme de V, notamment avec une orientation alternée de paires d'aimants permanents voisines.

9.  Procédé pour faire fonctionner une bicyclette (1) à propulsion électrique qui est configurée selon une ou plusieurs des revendications précédentes, **caractérisé en ce que** la machine électrique (4) est excitée avec une pré-commutation ou une post-commutation électrique en vue de générer un moment de réluctance.

Fig. 1

Fig. 2A

Fig. 2B

U

V   W

$L_T$

**Fig. 3**

7

13
8
10
12
13
8
10
12
13
8
10
11
9
12

**Fig. 4**

7   12

11
8
13
12
14
13
8
9
12

**Fig. 5**

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004140725 A